# EUROPEAN PATENT SPECIFICATION

(11) **EP 2 770 481 B1**
(45) Date of publication and mention of the grant of the patent: **18.11.2020**
(21) Application number: 14156200.9
(22) Date of filing: 21.02.2014
(51) Int. Cl.: G07B 15/02

(54) **Method of using virtual gantries to optimize the charging performance of in-vehicle parking systems**
Verfahren zur Verwendung virtueller Kranbrücken zur Optimierung der Ladeleistung für fahrzeuginterne Parksysteme
Procédé d'utilisation de portiques virtuels afin d'optimiser la performance de charge de systèmes de stationnement embarqués

(30) Priority: 21.02.2013 US 201361767425 P
(43) Date of publication of application: 27.08.2014
(73) Proprietor: Applied Telemetrics Inc., Toronto, ON M5C 2X8 (CA)
(72) Inventor: Grush, Bernard, Toronto Ontario M4L 2X1 (CA); Sauriol, Bruno, Toronto Ontario M4S 1G4 (CA); Leblanc, Joseph, Toronto Ontario M4Y 2P8 (CA)
(74) Representative: Bates, Alan Douglas Henry

(56) References cited:
- EP-A1- 1 050 853
- US-A1- 2003 189 498
- US-A1- 2007 225 912
- US-A1- 2012 265 585
- US-B1- 6 173 186

## Description

### FIELD OF THE INVENTION

The invention relates to charging methods and systems for vehicle parking.

### BACKGROUND

For drivers, making payments for the use of a parking space is often a time consuming nuisance and inefficient process - i.e., a high transaction cost for the motorist is due to frustrating, confusing, annoying, and time-wasting activities to find a parking spot and then to make a modest payment, while possibly misinterpreting rules, facing uncertainty regarding the amount to pay or duration of permitted stay, including potential difficulty or error in returning on time and the associated risk of incurring a parking citation for an expired or incorrect payment. Drivers are faced with a large number of payment collection methods and machines requiring cash, tokens, credit cards, residential passes, monthly passes tickets and bar-coded stubs.

For parking operators, the management of parking payments is expensive, difficult to optimize, and often incurs lost opportunities for both private-sector profit and public-sector transportation demand management:
1. Collecting payments for use of a parking space is often an expensive and inefficient process - i.e., the transaction cost of collecting parking payments is high and the machine and human-labor processes involved are wasteful and sometimes contentious. There are many reasons for this: the expense of curbside payment equipment and its maintenance, gating systems, manual collection, enforcement, accounting systems and many other operational components in aggregate can consume half or more of the parking fees collected, especially in the case of street parking. The parking operator generally invests in payment collection systems and costly enforcement methods that treat all customers as liable to cheat, which tends to increase equipment and enforcement expense.
2. Setting optimal prices whether for revenue maximization or transportation demand management is complicated due to one of more of lack of information, lack of ability to respond to local demand in a timely manner, and lack of efficient and easily understood methods to inform motorists of variable payment requirements.
3. Access to user loyalty methods and processes is generally restricted to methods for motorists who happen to live, work or go to school in a location at or near a particular parking lot. This is generally managed via the sale of a monthly or other long-term, date-limited and location-limited access pass to those drivers. This implies three lost opportunities:
   a. Creating loyalty among drivers who could choose to park frequently in a particular facility, but not sufficiently often to purchase a monthly parking pass.
   b. There are currently few or no effective ways to offer a form of multi-site access account for purposes of customer retention or customer attraction for a parking operator who manages more than one parking location (lot or garage).
   c. There are no reliable systems to offer multi-operator service and loyalty schemes for parking operators as there are for airline operators as are managed by airline "code-share" schemes.
4. There are lost opportunities reflected in the diminished access to broad consumer marketing systems that incorporate location-based marketing schemes such as coupons or discounts. This represents a loss for parking payment system operators as well as their parking customers and business neighbors. Addressing this opportunity can provide additional income streams that can serve to make autonomous parking systems and methods more affordable, useful, and widespread.

Hence, current parking operations are expensive, inefficient, complex and rife with lost opportunities. This forms a barrier to many potential uses, features, services and conveniences that would in turn generate profit for parking operators and offer parking demand management opportunities for cities, while at the same time offering convenience, time-savings and selected discounts to drivers.

US 2007/0225912 relates to a system and method for generating a record of the location-history of an asset or person. The system can be applied to road-pricing, congestion-pricing, and metered-by-the-minute parking.

EP 1050853 relates to charge processing. A device mounted in a vehicle detects the position of a vehicle using GPS signals from GPS satellites, and transmits this via ground wave communication to a general center. The general center performs charge processing (calculation) for an area in which a charge is applied based on the position of the vehicle received by ground wave communication, and transmits the result thereof to the device mounted in a vehicle. The device mounted in a vehicle collects a toll from a prepaid card or IC card or the like on the basis of the received charge processing result.

US 2003/189498 relates to a charge applicable area formed from a core area and a buffer area whose width is set in accordance with the amount of error in the position recognition of a GPS in order that a charge is only applied to a vehicle that has entered a charge applicable area and that no charge is applied to a vehicle outside this area.

US Patent No. 7,215,255 details a method and apparatus that comprises appropriate databases, wireless communication, and autonomous metering methods, combined with private, in-vehicle data services to provide a digital, location-based in-car meter intended to address these kinds of issues. The '255 Patent outlines the basis of a system enabled to gather and manage detailed geographic information for parking spots, parking garage entrances and related rate information in an electronic database associated with a location-aware, in-car telemetrics system in order to enable an intelligent, autonomous parking meter that operates without human intervention identifying payable parking events for automated payment and associated service offerings. Unfortunately, wireless positioning errors ranging up to a few tens of meters are common in telemetry systems. This can lead to positioning uncertainty resulting in mischarging for parking. It would be desirable to provide a method for optimizing charging performance of in-vehicle parking systems, and thus make available certain business opportunities for chargeable parking that arise from improved reliability.

### SUMMARY OF THE INVENTION

The invention is defined by the appended independent method claim 1.

Optional or preferred features are set out in the dependent claims.

The present method is directed to determining geographic location of a vehicle to enable an in-vehicle parking meter. The method aims to improve charging performance by addressing certain wireless positioning errors which may occur for any positioning technology such as GNSS, Cell-tower or WiFi or equivalent, particularly within urban environments or other forms of harsh signal terrain that is antithetical to reliable location determination using radio technologies.

A method is provided for charging a user for parking a vehicle in a chargeable parking facility. Signals are received from at least one signal source at a receiver disposed relative to the vehicle. For example, without limitation, the receiver may be disposed relative to the vehicle by being within, attached to or integrated into the vehicle. The nature of the received signals will depend on the receiver, but can include the use of any information from any source derived from location signals, acceleration data, gyroscopic sensors, speed data, inertial calculations, or any other heading calculations on any or all three of the X, Y and Z axis.

Using the received signals, an approximate path of travel of the vehicle is identified and it is determined whether the vehicle's approximate path of travel crosses a geofence associated with at least one boundary region of the chargeable parking facility. If the vehicle's approximate path of travel crosses the geofence, it is determined, with a degree of certainty, whether a park point approximating a location where the vehicle has come to rest lies inside the chargeable parking facility. If the park point is determined to lie inside the chargeable parking facility, the park point is associated with a charge, and the charge is assessed to the user.

The geofence may be:
a virtual gantry predetermined to approximately define an entry into the chargeable parking facility, and crossing the geofence comprises travelling through the virtual gantry.

The geofence may additionally (or in the alternative) be:
a bounding polygon predetermined to approximately define a perimeter around the chargeable parking facility.

If the degree of certainty is below a threshold such that the park point cannot be determined to lie inside the chargeable parking facility, a discrimination algorithm is employed. For example, a discrimination algorithm may be used to arbitrate between two (or more) candidate parking facilities, each with separate charges or charging regimes.

In some instances, the discrimination algorithm may comprise referring the received signals, the vehicle's approximate path of travel and the determination of any geofence crossed to a secondary system or human operator for determination of the park point before proceeding. In the case of human operator, this may be the driver of the vehicle or a third-party viewing the park point and data leading to the park point.

The discrimination algorithm may comprise weighing a probability that the park point lies inside the chargeable parking facility, having regard to at least one factor selected from the group consisting of:
the location of the chargeable parking facility;
the facility type of the chargeable parking facility;
any permitted direction(s) of travel (especially in the case of street parking segments);
the vehicle's approximate path of travel prior to coming to rest (including the user of any information from any source derived from location signals, acceleration data, gyroscopic sensors, speed data, inertial calculations, or any other heading calculations on any or all three of the X, Y and Z axis);
the location the vehicle was last detected, if the received signals were lost or weakened for a period of time;
inertial reckoning;
signal outlier removal, signal weighted averaging or other data filtering and statistical methods;
a past determination by a human operator of the location of a park point for a vehicle with a similar path of travel;
signalling within the chargeable parking facility;
positioning signals outside of the chargeable parking facility;
a determination of number of satellites in view; and
earth surface features in the area of the vehicle's approximate path of travel prior to coming to rest that could create local positioning noise, including the urban landscape.

Where virtual gantries are used, the step of determining if the vehicle's approximate path of travel crosses a geofence may comprise reviewing at least one factor selected from the group consisting of:
the direction of crossing the virtual gantry;
the final virtual gantry travelled through; and
the strength of the received signals after passing through the virtual gantry.

Where bounding polygons are used, the bounding polygon may be approximated with a bounding rectangle.

In one embodiment, the at least one signal source is a satellite positioning system.

The receiver may be a portable device or a device fixed in or on the vehicle.

In certain embodiments, the signal source (or at least part of its functionality) may be provided by a mobile device.

In certain embodiments, the signal source (or at least part of its functionality) may be provided by an in-dash positioning system.

In one embodiment, the signal source has receiving and transmitting components in separate physical devices that are in communication with each other.

Preferably, the method includes detecting at least one of (i) the time of day at which the vehicle came to rest at the park point and (ii) the duration of time the vehicle remained at the park point. Associating the park point with the charge may comprise selecting or calculating the charge associated with the chargeable parking facility from a database according to the time of day or the duration.

### BRIEF DESCRIPTION OF THE FIGURES

The invention is described below in detail with reference to the accompanying drawings in which:
**FIG. 1** illustrates two proximate surface parking lots, one of which is also proximate to a street parking segment. It shows vehicles parked in a way that may result in facility identification errors given positioning errors in wireless location technologies such as GNSS, cell tower, WiFi, etc.
**FIG. 2** illustrates two proximate garage entrances that may result in facility identification errors given positioning errors. If such proximate garage entrances were among a cluster of tall buildings the likelihood of such errors would be increased.
**FIG. 3** illustrates the placement of a Virtual Gantry for the entrance to a parking garage.
**FIG. 4** illustrates the placement of a Virtual Gantry and a Bounding Polygon for a surface parking lot.
**FIG. 5** illustrates the placement of a Bounding Polygon for a segment of street-parking spaces.
**FIG. 6** illustrates the placement of a Virtual Gantry and a Bounding Polygon for a parking garage with rooftop parking.
**FIG. 7** illustrates the placement of a default decision boundary between two adjacent proximate parking facilities including a potential travel path through both Virtual Gantries, and a vehicle entering one of them with several measures taken to contribute toward a likelihood determination.
**FIG. 8** illustrates the placement of a default decision boundary between two proximate parking facilities on opposite sides of a street.
**FIG. 9** illustrates a directionally oriented rectangle as the basis for a set of virtual gantry primitives.
**FIG. 10** illustrates the construction and subsequent breakdown of the rectangular virtual gantry into its flexible line primitives that may be processed independently or in context.

### DETAILED DESCRIPTION

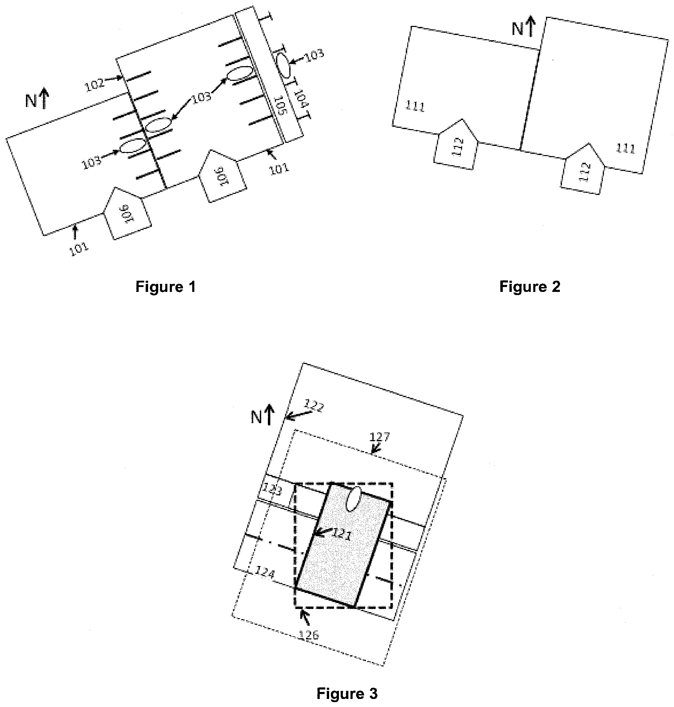

In the case of GNSS, tall buildings and other earth-surface features can cause signal reflections, radio-shadows and in the particular case of parking garages, the number of satellites in view (NSV) may decline to a very small number, possibly zero, depending on receiver technology, implying loss of positioning in the absence of additional techniques. As Figures 1 and 2 illustrate, there are several ways that these errors can result in mischarging for parking. As shown in **Figure 1**, it is possible for two surface lots **101** to share a boundary **102** such that vehicles **103** parking in one lot could be mistakenly identified by a wireless location system as parking in the other one. Similarly, a surface lot **101** might be positioned adjacent to a block-face of street parking spots **104**, where adjacent might mean separated only by a sidewalk **105** of 1.5 to two meters in width in an environment where 5m or 10m positioning errors are common. This can contribute to an erroneous billing assignment. As shown in **Figure 2**, it is possible for two adjacent parking garages **111** to have entranceways **112** situated in close proximity such that positioning errors might give rise to poor charging performance. Similarly, garage entrances might be adjacent to surface lot entrances or might be adjacent to block-faces with street parking. All of these situations can give rise to missed charges, erroneous charges, or incorrectly assigned payments when using fully autonomous, wireless location systems.

A method is provided using a programmed system for identifying when a vehicle has entered a chargeable parking facility, in which the vehicle's location is trackable to an approximate location by a geo-positioning system, such as but not limited to GPS, and in which chargeable parking facilities are delimited by geofences. The method comprises getting the vehicle's approximate location, and detecting when the vehicle has crossed through one geofence, called a virtual gantry, at an entrance to a parking facility which is itself bounded by a second geofence, called a Bounding Polygon, as determined by a path of travel of the vehicle toward and across that Virtual Gantry, wherein the Virtual Gantry has predefined boundaries that are capable of discriminating against other geofenced areas and non-geofenced areas.

The charging method exists within a larger system of geofences, which are preferably established, maintained and improved for best performance. In the present disclosure, the following geofence optimization stages will be described (first in simple terms, then in more detail) in support of the present charging method:
- preparation;
- processing; and
- process improvement.

It will be appreciated that although described as stages, the stages are not necessarily consecutive in time, but may overlap or occur simultaneously or in a different order.

The preparation stage establishes and scales adjustable earth-referenced geometric objects or geofences for pinpointing parking locations along streets, within surface lots, on rooftop lots and for reliable identification of entrances into covered parking facilities.

Two types of constraining geofences are defined, one for entering a parking facility ("Virtual Gantry"), and one for occupying a parking facility once a vehicle is parked ("Bounding Polygon"). These two types of geofences are positioned and sized with respect to expected subsequent vehicle positioning errors and temporal variation in those errors. These types of geofences are used to minimize false alarms and misses.

In this preparation stage, various definitions and related discrimination algorithms are established to guide and optimize the charging performance of autonomous, in-vehicle parking systems that rely on positioning systems that use radio signals such as those from GNSS, WiFi, or wireless telephony systems. Specifically, these definitions preferably include:
- Digitized geometric elements ("geofences") to define boundaries for detecting vehicle entry to, and occupancy of any form of parking facility, including street parking;
- Digitized decision boundaries for areas subject to variable positioning error due to radio signal variations and errors;
- Digitized decision boundaries for areas that are difficult to distinguish using radio-based positioning systems due to proximity of multiple parking facilities;
- Digitized decision boundaries to adjust for error allowances as location-determining technology changes, such as when additional satellite signals or more accurate telemetry technologies become available.

The Virtual Gantries are positionable as entry gates to parking facilities and are preferably dynamically resizable. Likewise, the Bounding Polygons are positionable as inclusion boundaries for street parking, surface parking lots, and rooftop parking lots and are preferably dynamically resizable. The resizing of perimeters of geofences can preferably be used to optimize for variations in GNSS integration, an increase or decrease in local WiFi sources or cell towers, local noise levels, changes in telemetry technology, variations among radio positioning systems, local variation in building density, and manual error correction.

In the processing stage, the adjustable geofence objects are managed and deployed. Pattern recognition and decision automation processes are used for automatic determination of a parking location and its correct payment assessment for parking fee calculation. The geofence objects, established in the preparation stage, can be used to decide whether a candidate is a payable location and in some cases to decide among two or more likely candidates. A decision can be made among candidates in proximate, adjacent or overlapping geofence scenarios. Although the method is automated, in some circumstances of low certainty, decisioning may be deferred to a human or human-assisted decision. Human corrective or adjusting input may be provided by the vehicle driver or may be similar in purpose to, but different in realization from, the human-assisted techniques used in the processing of low certainty or failed optical character recognition (OCR) decisions in automated license plate recognition (ALPR) systems used for highway tolling and red-light camera systems.

Dynamically adjustable virtual gantries can be used to distinguish between adjacent parking facilities such as between parking lots and garages and between a lot or garage and adjacent street parking. A vehicle's position track through or past one or more adjustable Virtual Gantries or one or more adjustable Bounding Polygons just prior to parking can be used to distinguish between proximate and possibly overlapping Virtual Gantries or Bounding Polygons. In the event of machine failures to make a reliable, autonomous parking fee determination, preferably the failure is recognized, whereupon the decisioning can be passed to a manual (human) process for resolution. Likewise, in other cases of uncertainty, the decisioning can be passed to a manual (human) process for resolution or for validation of the automated method's tentative result.

In the process improvement stage, ongoing improvement is preferably provided to allow the system to improve its discriminant functions used for automated adjudication of the correct identification of a parking facility. For example, machine-learning techniques can be used for automated decision improvement based on prior failures of autonomous decisions, said failures having previously required manual intervention for an assured determination of a correct parking fee.

The results of human correction of autonomous decision failures can preferably be observed and weighed in order to adjust virtual gantries, bounding polygons, and inter-gantry decision boundaries in order to improve subsequent autonomous decisions.

Taking a more detailed look, the preparation stage involves identifying geographic and decision criteria that will guide automatic vehicle location assignment decisions in a subsequent parking payment processing component. For every parking facility, whether garage, surface lot, roof lot, or street segment, we require a way to determine the likelihood that a vehicle is occupying the facility and is liable for payment to park there. This requires a minimum of two decisions: a geographic decision that the vehicle entered and occupied the said facility and a database look-up and calculation determination that the time and duration of the occupation is subject to a particular charge. The present disclosure is focused on facilitation of automatic, autonomous, geographic, database decisions regarding correct determination of entry and occupation of a parking facility. Less attention will be directed to the related matters of determining the time and duration of occupation. These are described in US Patent Number 7,215,255 and in any event, understood by persons skilled in the art. Likewise, a database look-up for location, price or charge assignment is believed to be understood by persons skilled in the art and is not described herein in detail.

Two types of geofence objects used in the present invention are [1] Virtual Gantries (entry gantries) for parking garages and for surface lots, and [2] Bounding Polygons for street parking, surface lots, and rooftop parking perimeters. Grid-aligned rectangles bounding these geofence objects and which may be used for rapid searches for Bounding Polygons and Virtual Gantries are understood by persons skilled in the art.

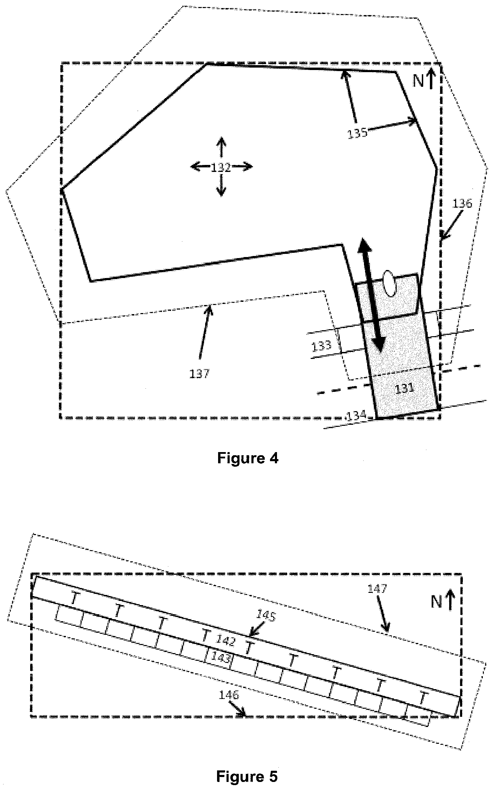

Virtual Gantries are used to detect entry into parking garages and surface parking lots. As shown in Figure 3, a Virtual Gantry **121** can be used to detect entry into garage **122**. As shown in Figure 4, a Virtual Gantry **131** can be used to detect entry into a surface lot **132**. A Virtual Gantry is a digitized rectangle aligned with the specific, generally off-cardinal, orientation of the entry to the subject facility. Preferably, the minimum width of a Virtual Gantry matches the width of the entrance ramp to the subject facility and preferably the length of the gantry extends from the front edge of the entrance of the subject facility, across the sidewalk **123 133** or other space between the entrance and the roadway proximate to the facility entrance to the opposite edge, or equivalent distance of said roadway **124 134**. The edges (sides) and the areas of Virtual Gantries **121 131** can be used to determine whether a vehicle has entered the associated facility **122 132**. Virtual Gantries may be manually drawn in a geographical information system (GIS), or may be calculated automatically in the case of the availability of adequate GIS and engineering plan data.

A facility that has multiple entrances can have multiple Virtual Gantries, one for each entrance. Therefore, references in the present disclosure to a virtual gantry in the singular should be understood to apply with equal relevance to a facility with multiple virtual gantries.

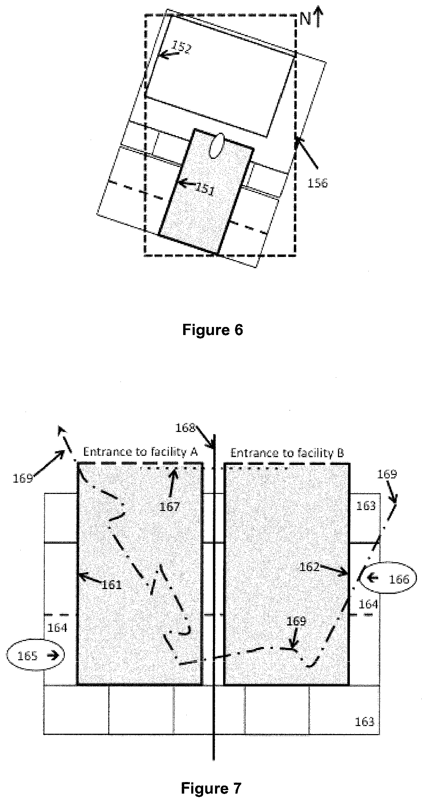

Bounding Polygons can be used to determine whether a vehicle is occupying, or has occupied, a specific facility. In three typical instances, Bounding Polygons can be used as geofences in surface lot, street parking or rooftop parking scenarios.
1. As shown in Figure 4, a Bounding Polygon **135** can be used as a minimum geofence for parking occupancy for surface lot **132**. When determining the Bounding Polygon for a surface lot, it is preferable to include the primary direction(s) (heading(s)) of travel on entrance, as this is useful in distinguishing between entering two or more closely proximate parking facilities. It is preferable that this includes any changes of direction (heading) until the allowable parking surface is reached.
2. As shown in Figure 5, a Bounding Polygon **145** can be used as a minimum geofence for parking occupancy for street parking segment **142**. When determining the Bounding Polygon for a street parking segment it is preferable to include the permitted direction(s) (heading(s)) of travel on this segment, as this is useful in determining which side of the street is being used, in resolving cases of proximate parking segments on intersecting streets, and in resolving cases of departures from street parking, such as parking in driveways or in perpendicular and angled parking stalls.
3. As shown in Figure 6, a Bounding Polygon **152** can be used as a minimum geofence for parking occupancy for rooftop parking entered via Virtual Gantry **151**. Note that in this example rooftop parking is treated as a different recognition case from garage parking even though a garage facility that has rooftop parking can share the same Virtual Gantry(ies) for both internal and rooftop parking. This is due to an increase in NSV or signal strength once the vehicle arrives on the roof.

There is a special instance of a Bounding Polygon for a garage without rooftop parking that may be used when indoor positioning, such as indoor GNSS, WiFi or inertial navigation, is available. This form of Bounding Polygon can be used in the same manner as that for surface lots, preferably including the primary direction(s) (heading(s)) of travel on entrance and until the allowable parking surface is reached, as this is useful in distinguishing between entering two or more closely proximate parking garages. Without indoor positioning, the Bounding Polygon for a garage without rooftop parking can be identical to its Virtual Gantry in the case of a garage with one Virtual Gantry or to a geofence inclusive of all of its Virtual Gantries in the case of a garage with multiple Virtual Gantries. An example of the latter could be a simple bounding rectangle.

Bounding Polygons may be manually digitized in a geographical information system (GIS), or may be calculated automatically in the case of the availability of adequate GIS and structural engineering information. Bounding Polygons are preferably defined to match the perimeter of the allowable parking area; hence these are preferably drawn with a sufficiently high degree of accuracy.

Bounding rectangles may be used to enable rapid search for both Virtual Gantries and Bounding Polygons as would be understood by persons skilled in the art. Bounding rectangles can be computed rather than manually digitized, and are preferably rectilinear with the cardinal directions of the mapping coordinate system used for the Virtual Gantries and Bounding Polygons. In cases of facilities with multiple Virtual Gantries, any associated bounding rectangle used to speed searches should preferably enclose all Virtual Gantries associated with a particular facility, as well as the associated Bounding Polygon in cases that use a Bounding Polygon. It will be appreciated that this is not critical for charging performance for parking use in the most basic sense. However, the use of bounding rectangles is described as a preferred embodiment for the benefit of ease of use and system scalability.

Bounding rectangles may be used, for example, in the following cases as illustrated:
1. The bounding rectangle for a garage without rooftop parking precisely bounds its respective Virtual Gantry(ies) **126**.
2. The bounding rectangle for a surface lot precisely bounds the combined Virtual Gantry(ies) and the Bounding Polygon of the said surface lot **136**.
3. The bounding rectangle for a street parking segment precisely bounds the Bounding Polygon of the said street parking segment **146**.
4. The bounding rectangle for a garage with rooftop parking precisely bounds the combined Virtual Gantry(ies) and the Bounding Polygon of said garage and its rooftop parking **156**.

Upon determination of the location coordinates of a parking event, herein called a "Park Point", the next step in this embodiment is to determine candidate facilities that said Park Point may be occupying. From there, Virtual Gantries and Bounding Polygons are examined closely for the final candidate facility decision.

In order to improve the odds that local positioning signal disturbances do not cause "missed" identification of a facility actually used, geofence objects can preferably be expanded to allow for variations in signal error or digitization error. Such expansion may be a simple, uniform increase in size of Virtual Gantry or a Bounding Polygon around the centroid of said geofences or, can, in one example embodiment, be biased orthogonal to the direction of travel since this predicts the orientation of urban canyons and related error biases. This can be considered to add a "buffer area", "safety zone", or as an "expansion" of the bounding constraints relative to whether a facility may be considered as a candidate for a particular Park Point. The aim of this is solely to reduce misses by ensuring that all nearby facilities are considered as candidates for closer likelihood-based decision computation.

It is preferable to automate said geofence expansion or even to apply rules-based intelligence. The reason for this is to permit adjustments to be made for signal error management in a controlled manner. This may apply differently depending on the nature of the signal environment such as regions of higher multi-path error, over variable-sized jurisdictions, or even over individual facilities in an especially difficult area. It may also apply as location technology changes, such as when additional satellite signals or more accurate telemetry technology becomes available. Hence, an appropriate degree of expansion can be determined dynamically as a function of several parameters such as, but not limited to, local building height and density, integration of multiple GNSS, types of sensors used in on-board telemetrics, quality of the position-velocity-time (PVT) algorithms used, etc. It is further possible to conceive of a system wherein in-car apparatuses within that system may differ in capability with one type using different satellites, PVT algorithms or sensors than another might be using. In such circumstances, it may also be preferred to use a different degree of geofence expansion even for different in-car telemetry subsystems.

As an example, the geofences for a surface lot to be detected by GNSS in open sky might be expanded very little compared to a similar lot among buildings in a city with tall buildings that might be expanded by an additional few tens of meters. Moreover, that same lot in the city might be expanded by only a few meters if two or more GNSS systems, such as GPS, GLONASS and Galileo were integrated by the telemetry system that is generating Park Points. This embodiment also helps to future-proof the database of geofences.

Hence geofence expansion can be used as a control mechanism to manage optimization and charging performance relative to satellite system(s) in use, local building configurations, and the properties of the in-car system(s) in use. This embodiment of the management of systemic expansion of these charging objects provides broad system flexibility permitting the use of error-prone GNSS signals in a financial application such as parking payment.

Expansion of a Virtual Gantry for a garage is illustrated in Figure 3 **127** and expansion of Bounding Polygons is illustrated in Figure 4 **137** and Figure 5 **147** for surface lots and street segments, respectively.

Before the processing stage can proceed, the Virtual Gantries, and Bounding Polygons for all parking facilities participating in the telemetry for Park Points are preferably gathered and stored in an appropriate database in conjunction with facility ID and location information and their related rate-tables (charging schedules). Such a database and its management follow known geographic information system (GIS) techniques arranged for this application and are understood by persons skilled in the art.

Following the preparation of geofences, facility IDs, and rate-table information, the generation and processing of Park Points follows these steps, which may take place in any combination of in-vehicle equipment or off-vehicle computers:
1. Using data from the in-vehicle telemetrics system, determine a Park Point and whether that point is likely in open sky (either street parking or surface facility), in a garage or on a garage rooftop.
   For most cases, Park Point is a best estimate of the resting location of the vehicle. In the case of the use of GNSS and a suddenly lowered or zero value for NSV and loss of satellite positioning, we may assume that we have entered a garage and use the last reliable position as Park Point in spite of the fact that it is almost certainly not the resting location of a parked vehicle. Because of the reduced reliability of GNSS location estimation in difficult urban canyon area (such as high buildings) any of various methods of outlier removal or weighted averaging of the last few points may be used. Such data filtering and statistical methods which would be known to persons skilled in the art (indeed these are often provided by the GNSS receiver manufacturer) are incorporated in this description to support the method;
2. Search through the list of potential Virtual Gantries and Bounding Polygons to determine candidate facilities for Park Point. This list should be pre-sorted in some way (for example by Latitude and Longitude) to allow for binary search or other optimizing search algorithms. Grid-aligned bounding rectangles may be useful to speed this process. Virtual Gantries and Bounding Polygons should be evaluated in this first-pass under their expanded forms to ensure a low likelihood of a missed parking episode.
3. Once candidate facilities are isolated, process each Park Point to determine one of:
   a. The likelihood that Park Point is unequivocally not in any parking facility. Finding zero candidates means Park-Point is not chargeable by the system. This implies one of: the parking location has no charge, the parking location is not part of the parking inventory being managed, or the positioning error associated with Park-Point is so large that local geofences need to be expanded further;
   b. The likelihood that Park Point is unequivocally in a unique Bounding Polygon when parking on street, in a surface lot, or on a rooftop lot. This determines the candidate parking location; or
   c. The likelihood that Park Point is unequivocally in or just passed through a unique Virtual Gantry when parking in a garage. This determines the candidate parking location; or
   d. Park Point is possibly in two or more Virtual Gantries or Bounding Polygons. In this case the competing candidates may be forwarded to a manual examination process. This process is similar to that used in OCR systems for licence-plate recognition.

Each Bounding Polygon and Virtual Gantry is associated with a specific type of parking facility. The process of the trip trajectory into or through for each type of Virtual Gantry or Bounding Polygon differs from that of the other types:
1. In the case of a candidate that is a surface lot, Park Point will be within the expanded Bounding Polygon of a specific surface lot, and the trajectory of the trip prior to arrival at Park Point includes the crossing of at least one of the edges of the Virtual Gantry of that same surface lot and that said Virtual Gantry was the last Virtual Gantry crossed before arrival at Park Point. The direction of crossing said edge would be presumed to be either into the Virtual Gantry, or exiting the Virtual Gantry in the direction of the associated Bounding Polygon. It is possible to cross the edges of any number of Virtual Gantries on a particular trip, but the final crossing before Park Point may be weighted more heavily in this decision. Note that it is also possible for Park Point to be within the expanded Bounding Polygon of two or more surface lots, as implied in Figure 1 and discussed further below.
2. In the case of a candidate that is a street segment, Park Point will be within the expanded Bounding Polygon of a specific street segment.
3. In the case of a candidate that is a rooftop, Park Point will be within the expanded Bounding Polygon of a specific rooftop, and that just prior to the arrival at Park Point would be presumed to have crossed over one or more of the four edges of the Virtual Gantry of the associated garage, and in the case of GNSS, the NSV will have dropped to zero or signal strength will have dropped significantly in the time between passing that Virtual Gantry and arriving at Park Point, at which NSV would rise to a value near to that just prior to its recent drop as it passed through the covered floor(s) of the associated garage.
4. In the case of a candidate that is a garage, Park Point would be presumed to be within a given expanded Virtual Gantry, the trajectory of the trip just prior to arrival at Park Point would be presumed to have crossed at least one of the edges of its Virtual Gantry, and the NSV or signal strength would be presumed to have dropped significantly immediately subsequent to that crossing.

In all the above cases, the determination of gantry-edge crossing can take advantage of any available external or supplementary vehicle alignment information in order to prevent false detection and to prevent gantry straddling due to positioning noise and errors. As one example, inertially aided navigation solutions help overcome undetermined GNSS heading at low speed. The present invention is not limited to this single example. For testing whether Park Point is inside an arbitrary polygon, any point-in-polygon algorithm can be used. Point-in-polygon algorithms are understood by persons skilled in the art.

Tests for inclusion in a parking facility will preferably pass one of the above four critical tests. The thresholds, and likelihood measurements and criteria for an automated decision process vs deferral to a human-mediated process may include a range of methods comprising various decision algorithms, said algorithms assess likelihood, and where possible apply a decision automatically to maximize correct assignment. According to Electronic fee collection - Charging performance - Part 1: Metrics (ISO/TS 17444-1, First edition, 2012*)*, there are four decision cases for discrete systems: correct charge, correct non-charge, missed recognition (undercharge), and false positive (overcharge). In this invention, the process of likelihood determination can be calculated in a variety of ways. The choice of calculation while potentially influencing the outcome of the process is not germane to its invention. This calculation should be designed to maximize both correct charging, and correct non-charging, while minimizing missed recognition, and false positives. In all cases where likelihood calculations do not exceed decision thresholds set by the telemetrics operator, the case should be forwarded to a human-mediated process. Hence, this embodiment provides a computation and decision architecture so that a parking telemetrics operator may apply the standard criteria for charging performance as set out in *ISO*/*TS 17444-1.*

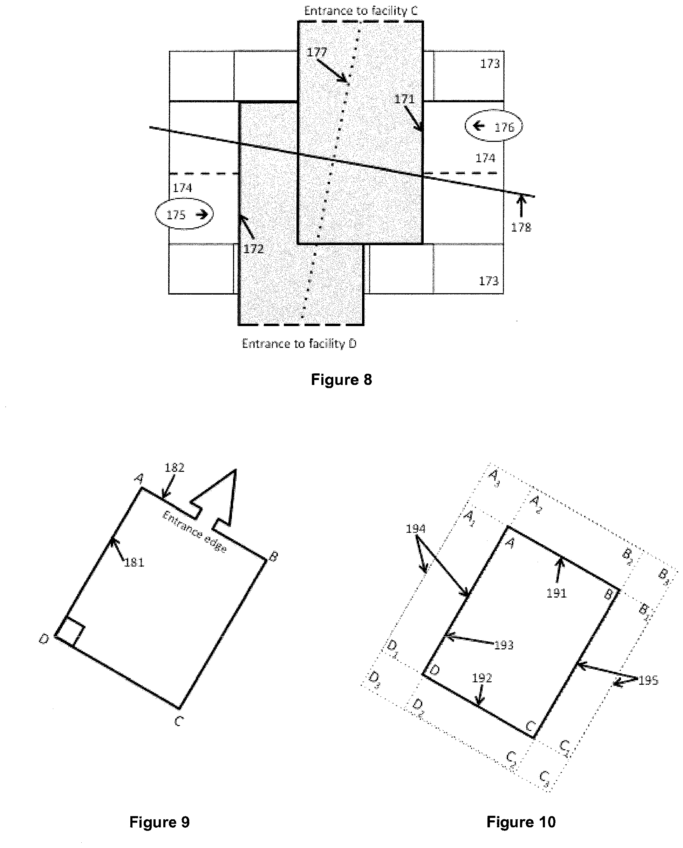

In some circumstances, given by the density of proximate parking facilities in an urban environment, and the degree of geofence expansion used, a Park Point may appear to be within the expanded geofences of multiple (N) candidate facilities. Likelihood determination techniques, using any form of temporal, geometric, proximate, weighted or other discriminant function known to persons skilled in the art can be described to handle this for each of 10 pairwise cases. One technique, among a set of techniques, for the case of discriminating between two Virtual Gantries is to construct a default boundary between the two facilities as the perpendicular bisector of the line connecting the midpoints of the gantry edges leading into the facilities. This is illustrated in Figure 7; line **167** connects the midpoints of the gantry edges leading into facility A and facility B, and default boundary **168** bisects that line. This is also illustrated in Figure 8; line **177** connects the midpoints of the gantry edges leading into facility C and facility D, and default boundary **178** bisects that line. Lines **168** and **178** are natural default boundaries between the respective gantry pairs.

This invention admits any number of calculations for likelihood determination as may be known to those skilled in the art. In cases of N>2 candidates, a useful approach would be to treat it as a combinatorial problem and break it down into _{N}C₂ pairwise cases and apply one or more of these 10 cases:
1. For two garage candidates, compare the likelihood of passage through their respective Virtual Gantries. To make an automated decision, Park Point should be deemed by the likelihood measure(s) in use to have passed one Virtual Gantry much more likely than the other. For example, if the trip trajectory leading up to Park Point crossed the edge coincident with a facility entrance of only one of the two facilities that would be a positive indicator. Another might be how long the trip trajectory leading up to Park Point dwelled in one gantry as opposed to the other, although this is only a heuristic given a noisy signal environment. If the two facilities have differing pricing schedules or different operators, thresholds should be stricter and forwarding to manual review more likely. It may be useful to weigh the crossing of each Virtual Gantry positively for the respective candidate and negatively for the other.
   As an illustration, either vehicle **165** or **166** in Figure 7, traveling on roadway **164** may choose to park in one of the two facilities A with Virtual Gantry **161** or B with Virtual Gantry **162**. In the illustration, vehicle **166** produced a positioning trace **169** through both Virtual Gantries. Several aspects of this travel path can be used to determine the relative likelihood of using facility A or B. These are: (a) the travel path exited the Virtual Gantry for A after it exited the Virtual Gantry for B; (b) the travel path exited the Virtual Gantry for A much closer to the entrance to facility A than did the travel path exit for Virtual Gantry for B relative to the entrance to facility B; the relative speed of **166** during passage through **162** was greater than its relative speed of travel through **161**; Park Point was on the "A" side of the discrimination boundary **168**. Weighing all these against a normalized threshold value would permit an automated decision for the final Park Point for vehicle **166**.
2. For two surface lot candidates, compare the likelihood of inclusion between their respective unexpanded Bounding Polygons combined with the likelihood of passage through their respective Virtual Gantries. To make an automated decision, both decisions should go unequivocally to the same facility. If the two facilities have differing pricing schedules or different operators, thresholds should be stricter. It may be useful to weigh the crossing of each Virtual Gantry positively for the respective candidate and negatively for the other.
3. For two street parking candidates, compare the likelihood of inclusion between their respective unexpanded Bounding Polygons. To make an automated decision, Park Point should have a high likelihood of being in one and a low likelihood of being in the other. If the two street segments have differing pricing schedules, thresholds should be stricter.
4. For two rooftop candidates, handle the same way as with two surface lot candidates.
5. For one street parking candidate and one surface lot candidate, compare the likelihood of inclusion between their respective unexpanded Bounding Polygons, and determine the likelihood of crossing the Virtual Gantry of the surface lot candidate. These tests should unequivocally select one outcome, else queue this to manual processing.
6. For one street parking candidate and one garage candidate, determine the likelihood of inclusion in the street parking unexpanded Bounding Polygon; determine the likelihood of crossing the unexpanded Virtual Gantry for the garage. Weigh NSV and signal strength. This decision will preferably have strict thresholds because the respective rate tables and operators will in many cases be different.
7. For one street parking candidate and one rooftop candidate, determine the likelihood of inclusion in each of the two unexpanded Bounding Polygons; determine the likelihood of crossing the unexpanded Virtual Gantry for the garage; and weigh NSV and signal strength (remember they will tend to dip and recover). This decision will preferably have strict thresholds because the respective rate tables and operators will almost always be different.
8. For one surface lot candidate and one garage candidate, determine the likelihood of inclusion in the surface lot unexpanded Bounding Polygon; determine the likelihood of crossing both of the unexpanded Virtual Gantries; and weigh NSV and signal strength.
9. For one surface lot candidate and one rooftop candidate, handle the same way as with two surface lot candidates; and weigh NSV and signal strength.
10. For one garage candidate and one rooftop candidate, compare the likelihood of passage through their respective Virtual Gantries; determine likelihood of inclusion in the Bounding Polygon of the rooftop facility; and weigh NSV and signal strength.

To minimize missed recognition and false positives, decisions can be set up so that in comparing any pair of candidates, an automated decision can be taken when one of the pair passes all likelihood thresholds and the other passes none. In less certain circumstances, the decision could be mediated by a human.

Note that when N>2, first perform _{N}C₂ pairwise decisions and only send the still-feasible subset to the human-mediation process.

In other circumstances, given local positioning noise conditions, especially in dense urban environments, a Park Point may appear to be within the geofence of a single candidate facility, when in fact the associated vehicle did not park in said facility. For this reason, single-candidate cases, should still be processed using all likelihood calculations, testing the hypothesis that the said vehicle did not park in said facility. This would be done to avoid a false positive. In such cases, where there is any reasonable doubt, a human should mediate.

We turn now to the process improvement stage. In general, there will be three reasons for failure of the automated process and subsequent reliance on human mediation:
1. Two or more proximate facilities are situated more closely on the ground than can be reliably distinguished using the positioning technology deployed within the telemetering system.
2. A single parking facility, not proximate to any other registered facility, is situated in an area with significant positioning noise, which creates too much uncertainty, presenting the possibility of a false positive in the case of proximate, non-registered paid parking or proximate free parking.
3. Two or more proximate facilities are situated more closely on the ground than can be reliably distinguished using the automated likelihood calculations available.

While such cases would gradually diminish in relative frequency, given both GNSS and telemetric improvements, one can expect there may always be a role for a human-mediated method as a final arbiter. In particular, even as GNSS and telemetric technologies improve, any new entry of geofenced objects for a parking facility may not be perfectly placed or perfectly expanded for full optimization. It is possible to use information captured during a manual/visual decision to improve geofence object positioning, geofence object expansion, decision boundaries (Figure 7 and Figure 8) or other thresholds relating to gantry crossing(s), NSV, and any other metric used in the likelihood analysis.

As human decisions are accumulated in the manual/visual process it is possible and desirable to automate improved decision processes by nudging geofence objects and decision boundaries and by searching for optimal thresholds using any of a number of known machine-learning techniques. Hence, one embodiment permits machine learning to improve the performance of this invention by nudging decision thresholds and parameters in the direction(s) indicated by human visual and manual intervention. This learning process will tend to settle on system threshold and parameter settings that will yield the best automated performance overall. The key to such training is to reduce the probability of sending an incomplete decision to a manual process without lowering charging performance - i.e., while retaining or improving the maximization of correct charging, and correct non-charging, and the minimization of missed recognition, and false positives.

A Virtual Gantry has been described in this disclosure as a specially placed and manipulated rectangle. A Virtual Gantry can also be considered equivalently in terms of its four sides or edges. This invention includes both ways of describing and using Virtual Gantries - as a rectangle and as a set of four independent lines or *gantry primitives* that happen to form a rectangle. In one embodiment of a Virtual Gantry, the rectangle may be collapsed to a single line placed along the entrance to a parking facility and the tests to determine crossing of the Virtual Gantry suitably simplified.

When visualizing a Virtual Gantry as a rectangle, one edge specifically represents the entrance to a parking facility and the two sides adjacent to that edge represent line gantries such that a vehicle would ideally cross one but not the other as it enters the related parking facility. The edge opposite the entrance edge is often not involved, however there are many facility entrance configurations, for example at the end of a street or long entrance ramp at an airport, such that a straight-in entry would ideally cross neither adjacent side of the rectangular Virtual Gantry, hence the gantry edge opposite the facility entrance edge can become an important primitive in such cases in particular.

When considering a Virtual Gantry as a closed rectangle defining an area, i.e., at least the width of the facility entrance multiplied by the distance from facility entrance to the sidewalk opposite (or a similar distance should there be no sidewalk), it is possible to enlarge the size of that rectangle in a uniform and controlled manner to ensure that the sample positions used to determine gantry crossing can be shown to either fall inside the Virtual Gantry on the way into the facility or to at least have crossed the gantry under the same circumstances. The reason for this is that the GPS signal process can make GPS positioning errors cause a vehicle to appear to jump from outside the gantry into a facility without appearing within the gantry. One way to resolve that is to widen the sides of the gantry adjacent to the entrance edge, or expand the entire rectangle. Equivalently, the sides of the Virtual Gantry can be considered line gantries (as described, e.g., in DE102006027676 and US20120265430 A1) and can be employed to determine whether one or the other of the four lines have been crossed. In either case, this approach to defining Virtual Gantries permits subsequent calculations to determine whether a vehicle has entered a parking facility to proceed in either equivalent embodiment of the geometric expression of a Virtual Gantry.

According to Figure 9, a graphic-mapping tool can place a rectangle ABCD **181** and orient it such that its leading edge AB **182** is parallel to or coincident with the entrance edge of a parking facility. The length of AB would match closely the length of the entrance to the facility. From this single "super-primitive", a specifically oriented rectangle, it is possible to derive all virtual geo-form parking primitives except bounding polygons. Further to this, in Figure 10, AB **191** is the threshold of the entry gate to the facility. DC **192** is parallel to AB **191** and roughly at the sidewalk (or equivalent distance) on the opposite side of the street to the facility. ABCD **193** can be constructed inexpensively, for example but not only, on Google Maps or Google Earth with 3 clicks: A, B and anywhere on the line DC **192**. From these three points and the right-angle constraint of a rectangle, the rectangular virtual gantry ABCD, as well as two virtual line gantries AD **194** and BC **195** are automatically established. The entire ABCD gantry **193** can be expanded as needed and the two line gantries can be moved to A₁D₁ and B₁C₁ or A₂D₂ and B₂C₂ or A₃D₃ and B₃C₃: (1) automatically according to local urban canyon needs; (2) on the basis of automated feedback loops from training/correction procedures; and (3) manually, under special circumstances. Preferably, the fundamental, regular ABCD construction can be used to derive all other virtual gantry primitives.

## Claims

1. A method of charging a user for parking a vehicle (103, 165, 166) in a chargeable parking facility (122, 132, 142), the method comprising:
receiving signals from at least one signal source at a receiver disposed relative to the vehicle;
using the received signals to identify an approximate path of travel of the vehicle;
determining if the vehicle's approximate path of travel crosses a geofence (135, 145, 152) associated with at least one boundary region of the chargeable parking facility;
expanding the geofence biased orthogonally to a direction of the approximate path of travel by a dynamic degree based on local building height and density;
if the vehicle's approximate path of travel has also crossed the expanded geofence, determining, with a degree of certainty, whether a park point approximating a location where the vehicle has come to rest lies inside the chargeable parking facility;
if the park point is determined to lie inside the chargeable parking facility, associating the park point with a charge; and
assessing the charge to the user.

2. The method of claim 1, wherein the geofence (135, 145, 152) comprises:
a virtual gantry (121, 151) predetermined to approximately define an entry into the chargeable parking facility (122, 132, 142), and crossing the geofence comprises travelling through the virtual gantry.

3. The method of claim 2, wherein the step of determining if the vehicle's (103, 165, 166) approximate path of travel crosses a geofence (135, 145, 152) comprises reviewing at least one factor selected from the group consisting of:
the direction of crossing the virtual gantry (121, 151);
the final virtual gantry travelled through;
and the strength of the received signals after passing through the virtual gantry.

4. The method of claim 1, 2, or 3, wherein the geofence (135, 145, 152) comprises:
a bounding polygon predetermined to approximately define a perimeter around the chargeable parking facility (122, 132, 142).

5. The method of claim 4, wherein the bounding polygon is approximated with a bounding rectangle.

6. The method of any preceding claim, wherein if the degree of certainty is below a threshold such that the park point cannot be determined to lie inside the chargeable parking facility (122, 132, 142), a discrimination algorithm is employed.

7. The method of claim 6, wherein the discrimination algorithm comprises referring the received signals, the vehicle's approximate path of travel and the determination of any geofence (135, 145, 152) crossed to a secondary system or human operator for determination of the park point.

8. The method of claim 6 or 7, wherein the discrimination algorithm comprises:
weighing a probability that the park point lies inside the chargeable parking facility (122, 132, 142), having regard to at least one factor selected from the group consisting of:
the location of the chargeable parking facility;
the facility type of the chargeable parking facility;
permitted directions of travel;
the vehicle's (103, 165, 166) approximate path of travel prior to coming to rest;
the location the vehicle was last detected, if the received signals were lost or weakened for a period of time;
inertial reckoning;
signal outlier removal, signal weighted averaging or other data filtering and statistical methods;
a past determination by a human operator of the location of a park point for a vehicle with a similar path of travel;
signalling within the chargeable parking facility;
positioning signals outside of the chargeable parking facility;
a determination of number of satellites in view; and
earth surface features in the area of the vehicle's approximate path of travel prior to coming to rest that could create local positioning noise, including the urban landscape.

9. The method of any preceding claim, wherein the signal source is a satellite system.

10. The method of any preceding claim, wherein the receiver is a portable device.

11. The method of claims 1 to 9, wherein the receiver is a device fixed in or on the vehicle(103, 165, 166).

12. The method of any preceding claim, wherein the receiver is a mobile device.

13. The method of any preceding claim, wherein the receiver is an in-dash positioning system.

14. The method of any preceding claim, wherein the signal source has receiving and transmitting components in separate physical devices that are in communication with each other.

15. The method of any preceding claim, further comprising detecting at least one of the time of day at which the vehicle (103, 165, 166) came to rest at the park point and the duration of time the vehicle remained at the park point;
wherein associating the park point with the charge comprises selecting the charge associated with the chargeable parking facility (122, 132, 142) from a database according to said at least one of the time of day at which the vehicle came to rest at the park point and the duration of time the vehicle remained at the park point.

## Patentansprüche

1. Verfahren zum Erheben einer Gebühr von einem Benutzer für das Parken eines Fahrzeugs (103, 165, 66) in einer gebührenpflichtigen Parkeinrichtung (122, 132, 142), wobei das Verfahren Folgendes aufweist:
Empfangen von Signalen von wenigstens einer Signalquelle an einem relativ zu dem Fahrzeug angeordneten Empfänger;
Verwenden der empfangenen Signale, um einen ungefähren Fahrweg des Fahrzeugs auszumachen;
Bestimmen, ob der ungefähre Fahrweg des Fahrzeugs einen Geofence (135, 145, 152) überquert, der wenigstens einem Grenzbereich der gebührenpflichtigen Parkeinrichtung zugeordnet ist;
Erweitern des Geofence mit einem zu einer Richtung des ungefähren Fahrwegs orthogonalen Bias um einen dynamischen Grad, der auf einer lokalen Gebäudehöhe und -dichte basiert;
wenn der ungefähre Fahrweg des Fahrzeugs auch den erweiterten Geofence überquert hat, Bestimmen, mit einem gewissen Grad an Sicherheit, ob ein Parkpunkt, der sich einem Ort annähert, an dem das Fahrzeug zum Stehen gekommen ist, innerhalb der gebührenpflichtigen Parkeinrichtung liegt;
wenn festgestellt wird, dass der Parkpunkt innerhalb der gebührenpflichtigen Parkeinrichtung liegt, Zuordnen einer Gebühr zu dem Parkpunkt; und
Feststellen der Gebühr für den Benutzer.

2. Verfahren nach Anspruch 1, wobei der Geofence (135, 145, 152) Folgendes aufweist:
ein virtuelles Portal (121, 151), das vorbestimmt ist, um eine Einfahrt in die gebührenpflichtige Parkeinrichtung annähernd zu definieren, und das Überqueren des Geofence die Fahrt durch das virtuelle Portal aufweist.

3. Verfahren nach Anspruch 2, wobei der Schritt des Bestimmens, ob der ungefähre Fahrweg des Fahrzeugs (103, 165, 166) einen Geofence (135, 145, 152) überquert, das Überprüfen wenigstens eines Faktors aufweist, der aus der Gruppe bestehend aus den Folgenden ausgewählt ist:
der Richtung, in der das virtuelle Portal (121, 151) durchquert wird;
dem letzten durchfahrenen virtuellen Portal und
der Stärke der empfangenen Signale nach Durchfahren des virtuellen Portals.

4. Verfahren nach Anspruch 1, 2 oder 3, wobei der Geofence (135, 145, 152) Folgendes aufweist:
ein umgebendes Polygon, das vorbestimmt ist, um einen Umfang um die gebührenpflichtige Parkeinrichtung (122, 132, 142) annähernd zu definieren.

5. Verfahren nach Anspruch 4, bei dem das umgebende Polygon mit einem begrenzenden Rechteck angenähert wird.

6. Verfahren nach einem der vorhergehenden Ansprüche, wobei, wenn der Grad der Sicherheit unter einem Schwellenwert liegt, so dass nicht bestimmt werden kann, ob der Parkpunkt innerhalb der gebührenpflichtigen Parkeinrichtung (122, 132, 142) liegt, ein Differenzierungsalgorithmus verwendet wird.

7. Verfahren nach Anspruch 6, wobei der Differenzierungsalgorithmus das Weiterleiten der empfangenen Signale, des ungefähren Fahrwegs des Fahrzeugs und der Bestimmung jedes überquerten Geofence (135, 145, 152) an ein sekundäres System oder eine Bedienperson zur Bestimmung des Parkpunktes aufweist.

8. Verfahren nach Anspruch 6 oder 7, wobei der Differenzierungsalgorithmus aufweist:
Abwägen einer Wahrscheinlichkeit, dass der Parkpunkt innerhalb der gebührenpflichtigen Parkeinrichtung (122, 132, 142) liegt, unter Berücksichtigung wenigstens eines Faktors, der aus der Gruppe bestehend aus Folgenden ausgewählt ist:
dem Ort der gebührenpflichtigen Parkeinrichtung;
dem Einrichtungstyp der gebührenpflichtigen Parkeinrichtung;
erlaubten Fahrtrichtungen;
der ungefähren Fahrtrichtung des Fahrzeugs (103, 165, 166) vor dem Stillstand;
dem Ort, an dem das Fahrzeug zuletzt erfasst wurde, falls die empfangenen Signale für eine gewisse Zeit verloren gingen oder schwächer waren;
Trägheitsberechnung;
Entfernung von Signalausreißern, signalgewichteter Mittelwertbildung oder anderen Datenfilterungs- und statistische Verfahren;
einer früheren Bestimmung des Orts eines Parkpunktes für ein Fahrzeug mit einem ähnlichen Fahrweg durch eine Bedienperson;
Signalisierung innerhalb der gebührenpflichtigen Parkeinrichtung;
Positionierungssignalen außerhalb der gebührenpflichtigen Parkeinrichtung;
einer Bestimmung der Anzahl der sichtbaren Satelliten; und
Merkmalen der Erdoberfläche in dem Bereich des ungefähren Fahrwegs des Fahrzeugs vor dem Stillstand, die lokales Positionsrauschen verursachen könnten, einschließlich der städtischen Landschaft.

9. Verfahren nach einem der vorhergehenden Ansprüche, wobei die Signalquelle ein Satellitensystem ist.

10. Verfahren nach einem der vorhergehenden Ansprüche, wobei der Empfänger eine tragbare Vorrichtung ist.

11. Verfahren nach einem der Ansprüche 1 bis 9, wobei der Empfänger eine im oder am Fahrzeug (103, 165, 166) befestigte Vorrichtung ist.

12. Verfahren nach einem der vorhergehenden Ansprüche, wobei der Empfänger eine Mobilvorrichtung ist.

13. Verfahren nach einem der vorhergehenden Ansprüche, wobei der Empfänger ein Bord-Positionsbestimmungssystem ist.

14. Verfahren nach einem der vorhergehenden Ansprüche, wobei die Signalquelle Empfangs- und Sendeteile in getrennten physischen Vorrichtungen hat, die miteinander kommunizieren.

15. Verfahren nach einem der vorhergehenden Ansprüche, das ferner das Erfassen von wenigstens einem von der Uhrzeit, zu der das Fahrzeug (103, 165, 166) am Parkpunkt zum Stillstand gekommen ist, und der Dauer des Verweilens des Fahrzeugs am Parkpunkt aufweist;
wobei das Zuordnen des Parkpunktes zu der Gebühr das Auswählen der Gebühr, die der gebührenpflichtigen Parkeinrichtung (122, 132, 142) zugeordnet ist, aus einer Datenbank gemäß dem wenigstens einen von der Tageszeit, zu der das Fahrzeug am Parkpunkt zum Stehen kam, und der Dauer des Verweilens des Fahrzeugs am Parkpunkt aufweist.

## Revendications

1. Procédé de facturation d'un utilisateur pour garer un véhicule (103, 165, 166) dans une installation de stationnement payant (122, 132, 142), le procédé comprenant :
la réception de signaux à partir d'au moins une source de signaux au niveau d'un récepteur disposé relativement au véhicule ;
l'utilisation des signaux reçus pour identifier une trajectoire approximative de déplacement du véhicule ;
la détermination que la trajectoire approximative de déplacement du véhicule franchit ou non une géo-barrière (135, 145, 152) associée à au moins une région de délimitation de l'installation de stationnement payant ;
l'élargissement de la géo-barrière biaisée orthogonalement par rapport à une direction de la trajectoire approximative de déplacement par un degré dynamique sur la base d'une hauteur et d"une densité des édifices locaux ;
si la trajectoire approximative de déplacement du véhicule a également franchi la géo-barrière élargie, la détermination avec un degré de certitude, qu'un point de stationnement avoisinant un emplacement où s'est immobilisé le véhicule repose à l'intérieur de l'installation de stationnement payant ;
s'il est déterminé que le point de stationnement repose à l'intérieur de l'installation de stationnement payant, l'association d'une redevance au point de stationnement ; et
l'imposition de la redevance à l'utilisateur.

2. Procédé selon la revendication 1, dans lequel la géo-barrière (135, 145, 152) comprend :
un portique virtuel (121, 151) prédéterminé pour définir approximativement une entrée dans l'installation de stationnement payant (122, 132, 142), et le franchissement de la géo-barrière comprend le passage par le portique virtuel.

3. Procédé selon la revendication 2, dans lequel l'étape de détermination que la trajectoire approximative de déplacement du véhicule (103, 165, 166) franchit ou non une géo-barrière (135, 145, 152) comprend le passage en revue d'au moins un facteur sélectionné dans le groupe consistant en :
le sens de franchissement du portique virtuel (121, 15) ;
le dernier portique virtuel franchi ;
et la puissance des signaux reçus après le franchissement du portique virtuel.

4. Procédé selon la revendication 1, 2, ou 3, dans lequel la géo-barrière (135, 145, 152) comprend :
un polygone de délimitation prédéterminé pour définir approximativement un périmètre autour de l'installation de stationnement payant (122, 132, 142).

5. Procédé selon la revendication 4, dans lequel le polygone de délimitation est approximé par un rectangle de délimitation.

6. Procédé selon n'importe quelle revendication précédente, dans lequel si le degré de certitude est inférieur à un seuil si bien qu'il n'est pas possible de déterminer que le point de stationnement repose à l'intérieur de l'installation de stationnement payant (122, 132, 142), un algorithme de discrimination est employé.

7. Procédé selon la revendication 6, dans lequel l'algorithme de discrimination comprend la référence des signaux reçus, de la trajectoire approximative de déplacement du véhicule et de la détermination de toute géo-barrière (135, 145, 152) franchie à un système secondaire ou opérateur humain pour la détermination du point de stationnement.

8. Procédé selon la revendication 6 ou 7, dans lequel l'algorithme de discrimination comprend :
la pondération d'une probabilité que le point de stationnement repose à l'intérieur de l'installation de stationnement payant (122, 132, 142), en considérant au moins un facteur sélectionné dans le groupe consistant en :
l'emplacement de l'installation de stationnement payant ;
le type d'installation de l'installation n de stationnement payant ;
les sens de déplacement autorisés ;
la trajectoire approximative de déplacement du véhicule (103, 165, 166) avant son immobilisation ;
le dernier emplacement où le véhicule a été détecté, si les signaux reçus ont été perdus ou affaiblis pendant une période de temps ;
une estime inertielle ;
une suppression d'anomalies de signaux, un moyennage pondéré de signaux ou autres procédés de filtrage de données et de statistiques ;
une détermination passée par un opérateur humain de l'emplacement d'un point de stationnement pour un véhicule ayant une trajectoire de déplacement similaire ;
une signalisation au sein de l'installation de stationnement payant ;
des signaux de positionnement en dehors de l'installation de stationnement payant;
une détermination du nombre de satellites en vue ; et
des caractéristiques de la surface de la terre dans la zone de la trajectoire approximative de déplacement du véhicule avant son immobilisation qui pourraient créer un bruit de positionnement local, y compris le paysage urbain.

9. Procédé selon n'importe quelle revendication précédente, dans lequel la source de signaux est un système satellite.

10. Procédé selon n'importe quelle revendication précédente, dans lequel le récepteur est un dispositif portable.

11. Procédé selon la revendication 1 à 9, dans lequel le récepteur est un dispositif fixé dans ou sur le véhicule (103, 165, 166).

12. Procédé selon n'importe quelle revendication précédente, dans lequel le récepteur est un dispositif mobile.

13. Procédé selon n'importe quelle revendication précédente, dans lequel le récepteur est un système de positionnement monté dans le tableau de bord.

14. Procédé selon n'importe quelle revendication précédente, dans lequel la source de signaux présente des composants de réception et d'émission dans des dispositifs physiques séparés qui communiquent l'un avec l'autre.

15. Procédé selon n'importe quelle revendication précédente, comprenant en outre la détection d'au moins une heure de la journée à laquelle le véhicule (103, 165, 166) s'est immobilisé au point de stationnement et la durée de séjour du véhicule au point de stationnement ;
dans lequel l'association de la redevance au point de stationnement comprend la sélection de la redevance associée à l'installation de stationnement payant (122, 132, 142) à partir d'une base de données conformément à ladite au moins une heure de la journée à laquelle le véhicule s'est immobilisé au point de stationnement et la durée de séjour du véhicule au point de stationnement.
